# EUROPEAN PATENT APPLICATION

(11) **EP 3 415 986 A1**
(43) Date of publication of application: **19.12.2018**
(21) Application number: 18177364.9
(22) Date of filing: 12.06.2018
(51) Int. Cl.: G03B 21/00, G03B 21/16

(54) **PROJECTOR**

(30) Priority: 15.06.2017 CN 201710453442
(71) Applicant: Coretronic Corporation, Hsin-Chu 300 (TW)
(72) Inventor: CHIEN, Chao-Nan, 300 Hsin-Chu (TW); LIN, Tsung-Ching, 300 Hsin-Chu (TW)
(74) Representative: Ter Meer Steinmeister & Partner

(57) **Abstract**

A projector includes a housing, a light source device, a light engine module and a lens module. The housing has an air inlet and an air outlet. The light source device is disposed in the housing and located between the air inlet and the air outlet. The light source device provides an illumination beam. The light source device includes a plurality of light sources and correspondingly-connected heat dissipating elements. The light sources include a first, second and third light sources. The heat dissipating elements include a first and second heat dissipating elements adjacent to the air inlet and the air outlet respectively. The first and second light sources are connected to the first and second heat dissipating elements respectively. The light engine module is adapted to convert the illumination beam into an image beam. The lens module is adapted to convert the image beam into a projection beam.

## Description

THIS APPLICATION CLAIMS THE PRIORITY BENEFIT OF CHINA APPLICATION (CN201710453442.5 FILED ON 2017/06/15).

### FIELD OF THE INVENTION

The invention relates to a projector, and more particularly to a projector having a good heat dissipating efficiency.

### BACKGROUND OF THE INVENTION

Projector includes a light source device, a light engine module and a projection lens. The light source device is used to provide an illumination beam, a light valve of the light engine module is used to convert the illumination beam into an image beam, and the projection lens is used to project the image beam on the screen, thereby forming an image is on the screen. Ultra-high pressure mercury lamp is the light source used in early light source devices, and the ultra-high pressure mercury lamp can provide white light as an illumination beam. With the development of illumination technology, some light sources such as the light emitting diode light source and laser light source with power-saving advantage are gradually being used.

The light efficiency of the laser light source is higher than that of the light emitting diode. However, the color saturation, the price and the service life of the light emitting diode light source are better than those of the laser light source. The conventional light emitting diode light sources are red, green and blue light emitting diodes. In order to improve the overall luminance of the projector, more light emitting diodes are needed to achieve the objective of high luminance. However, the temperature of the light emitting diodes is an important factor affecting the service life and luminance. Therefore, how to improve the heat dissipating efficiency of the light sources is the focus of attention of the persons in the field of the art when it is necessary to use more light emitting diodes to achieve the objective of high luminance.

The information disclosed in this "BACKGROUND OF THE INVENTION" section is only for enhancement understanding of the background of the invention and therefore it may contain information that does not form the prior art that is already known to a person of ordinary skill in the art. Furthermore, the information disclosed in this "BACKGROUND OF THE INVENTION" section does not mean that one or more problems to be solved by one or more embodiments of the invention were acknowledged by a person of ordinary skill in the art.

### SUMMARY OF THE INVENTION

One objective of the invention is to provide a projector with a light source device having a good heat dissipating efficiency, thereby improving the service life of the light source device and reducing the attenuation of luminance.

Other objectives and advantages of the invention may be further understood from the technical features disclosed below.

To achieve one or a portion or all of the above objectives or other objectives, the invention provides a projector, which includes a housing, a light source device, a light engine module and a lens module. The housing has an air inlet and an air outlet. The light source device is disposed in the housing and located between the air inlet and the air outlet. The light source device is adapted to provide an illumination beam. The light source device includes a plurality of light sources and a plurality of heat dissipating elements.

The plurality of light sources includes a first light source, a second light source and a third light source. The second light source and the third light source are disposed opposite to each other. The plurality of heat dissipating elements is correspondingly connected to the plurality of light sources. The plurality of heat dissipating elements includes a first heat dissipating element and a second heat dissipating element. A first heat dissipating element is adjacent to the air inlet. The second heat dissipating element is adjacent to the air outlet. The first light source is connected to the first heat dissipating element and the second light source is connected to the second heat dissipating element. The light engine module is disposed on a transmission path of the illumination beam and adapted to convert the illumination beam into an image beam. The lens module is disposed on a transmission path of the image beam and adapted to convert the image beam into a projection beam.

Preferably, the housing has a first side surface, a second side surface opposite to the first side surface, a third side surface and a fourth side surface opposite to the third side surface, the third side surface and the fourth side surface are adjacent between the first side surface and the second side surface respectively, and the lens module has a first optical axis, the first side surface and the second side surface are perpendicular to the first optical axis respectively, and the third side surface and the fourth side surface are parallel to the first optical axis respectively.

Preferably, the air inlet of the housing is disposed on the first side surface, and the air outlet is disposed on the second side surface.

Preferably, the air inlet of the housing is disposed on the third side surface, and the air outlet is disposed on the second side surface.

Preferably, the projector may further comprise at least one fan.

Preferably, the at least one fan is disposed in the housing and the at least one fan is located between the air outlet and the second heat dissipating element, an airflow is generated by the at least one fan, the airflow flows into the air inlet and flows out from the air outlet, a direction of the airflow flowing into the air inlet and a direction of the airflow flowing out from the air outlet are parallel or non-parallel to the first optical axis of the lens module respectively.

Preferably, the light source device has a second optical axis, and the second optical axis is parallel to the first optical axis of the lens module.

Preferably, the light source device further comprises a fixing base, the light sources further comprise a fourth light source, the heat dissipating elements further comprise a third heat dissipating element and a fourth heat dissipating element, the third light source is connected to the third heat dissipating element, the fourth light source is connected to the fourth heat dissipating element, the first light source, the second light source, the third light source and the fourth light source are disposed to the fixing base respectively, the third heat dissipating element is located between the first heat dissipating element and the fixing base, and the fourth heat dissipating element is located between the second heat dissipating element and the fixing base.

Preferably, there is a first distance between the first heat dissipating element and the air inlet, there is a second distance between the third heat dissipating element and the air inlet, and the first distance and the second distance are equal to each other.

Preferably, a first distance is between the first heat dissipating element and the air inlet, a second distance between the third heat dissipating element and the air inlet, and the first distance and the second distance are not equal to each other.

Preferably, the light source device further comprises at least four heat conducting elements, the heat conducting elements comprise a first heat conducting element connected between the first light source and the first heat dissipating element, a second heat conducting element connected between the second light source and the second heat dissipating element, a third heat conducting element connected between the third light source and the third heat dissipating element, and a fourth heat conducting element connected between the fourth light source and the fourth heat dissipating element.

Preferably, the first light source, the second light source, the third light source and the fourth light source generate a first beam, a second beam, a third beam and a fourth beam respectively, the first beam is red, the second beam is green, the third beam is blue and the fourth beam is blue, and the illumination beam is composed of the first beam, the second beam and the fourth beam.

Preferably, the second light source and the third light source are located on opposite sides of the fixing base respectively, the second light source comprises a wavelength conversion element and a light emitting chip, the light emitting chip is adapted to generate a fifth beam, the fifth beam has a color light same as the third light source, the light source device further comprises a dichroic mirror located between the second light source and the third light source, the wavelength conversion element is adapted to convert the fifth beam emitted from the light emitting chip of the second light source into the second beam and transmitting the converted second beam to the dichroic mirror, the dichroic mirror reflects the second beam in a direction toward the light engine module, the third beam emitted from the third light source passes through the wavelength conversion element and is transmitted to the wavelength conversion element, and the wavelength conversion element is adapted to convert the third beam into the second beam and transmitting the converted second beam to the dichroic mirror.

Preferably, the first light source, the second light source and the third light source are located on different sides of the fixing base respectively, and the fourth light source and the second light source are located on the same side of the fixing base.

Preferably, the second light source, the third light source and the fourth light source are located on different sides of the fixing base respectively, and the first light source and the second light source are located on the same side of the fixing base.

Preferably, the housing further has at least one opening, the opening is located on one side of the second heat dissipating element, and the opening is located on a bottom surface of the housing.

Preferably, the projector may further comprise an electronic device, wherein the electronic device is disposed in the housing and adjacent to the light source device, the light engine module and the lens module.

Preferably, the projector may further comprise at least one fan, wherein the at least one fan is located between the first heat dissipating element and the second heat dissipating element, an airflow is generated by the at least one fan, the airflow flows into the air inlet and flows out from the air outlet, and the airflow sequentially passes through the first heat dissipating element, the at least one fan and the second heat dissipating element.

Preferably, the light source device has a second optical axis, and the second optical axis is not parallel to the first optical axis of the lens module.

In summary, in the projector of the embodiment of the invention, the heat dissipating elements of light sources dispose at the air inlet or the air outlet with higher flow rate and relatively high heat transfer coefficient. The light sources have higher temperature sensitivity and higher light output power. For example, the first heat dissipating element of the first light source (red light source) is disposed at a position adjacent to the air inlet, and the second heat dissipating element of the second light source (for generating the green beam) is disposed at a position adjacent to the air outlet. In the configuration, the efficiency of transmitting the heat generated by the first light source and the second light source out from the housing is effectively enhanced, thereby improving the life of the light source device and reducing the attenuation of luminance.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic functional block diagram of a projector in accordance with an embodiment of the invention;
FIG. 2 is a schematic structural view of the projector shown in FIG. 1;
FIG. 3 is a schematic structural view of a partial area Z of the light source device shown in FIG. 2;
FIG. 4A is a schematic view showing the relationship among the temperature, the luminance and the service life of a red light emitting chip;
FIG. 4B is a schematic view showing the relationship among the temperature, the luminance and the service life of a blue light emitting chip;
FIG. 5 is a schematic structural view of a projector in accordance with another embodiment of the invention;
FIG. 6 is a schematic structural view of a projector in accordance with another embodiment of the invention;
FIG. 7 is a schematic structural view of a projector in accordance with another embodiment of the invention;
FIG. 8 is a schematic structural view of a projector in accordance with another embodiment of the invention;
FIG. 9 is a schematic structural view of a projector in accordance with another embodiment of the invention;
FIG. 10 is a schematic structural view of a projector in accordance with another embodiment of the invention;
FIG. 11 is a schematic structural view of a projector in accordance with another embodiment of the invention; and
FIG. 12 is a schematic structural view of a projector in accordance with another embodiment of the invention.

### DETAILED DESCRIPTION OF PREFERRED EMBODIMENTS

In the following detailed description of the preferred embodiments, reference is made to the accompanying drawings which form a part hereof, and in which is shown by way of illustration specific embodiments in which the invention may be practiced. In this regard, directional terminology, such as "top", "bottom", "front", "back", etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including", "comprising", or "having" and variations thereof herein is meant to encompass the items listed thereafter and equivalents thereof as well as additional items. Unless limited otherwise, the terms "connected", "coupled", and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

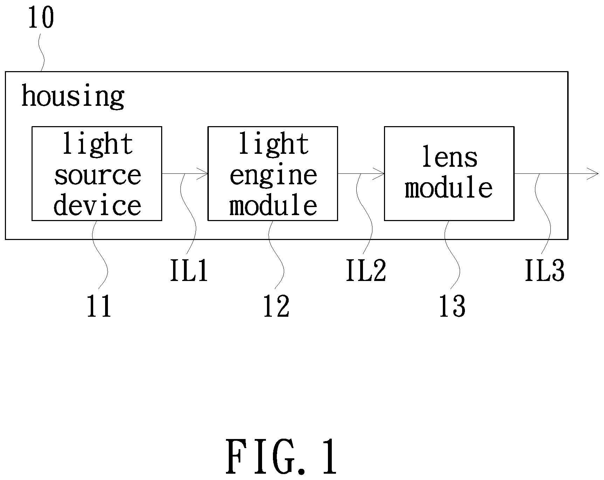

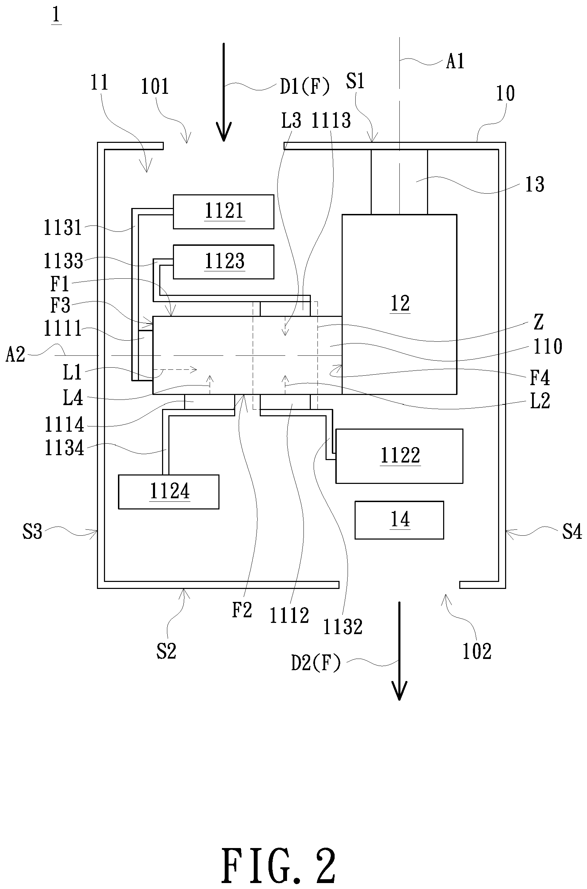

Referring to FIGs. 1 and 2. FIG. 1 is a schematic functional block diagram of a projector in accordance with an embodiment of the invention. FIG. 2 is a schematic structural view of the projector shown in FIG. 1. As shown in FIGs. 1 and 2, the projector 1 of the embodiment includes a housing 10, a light source device 11, a light engine module 12 and a lens module 13. The housing 10 includes an air inlet 101 and an air outlet 102. The light source device 11 is disposed in the housing 10 and located between the air inlet 101 and the air outlet 102. The light source device 11 is used to provide an illumination beam IL1, and the light source device 11 includes a plurality of light sources and a plurality of heat dissipating elements correspondingly connected to the light sources. In the embodiment, the number of the light sources and the heat dissipating elements is four respectively for example, but the invention is not limited thereto. The number of the light sources and the heat dissipating elements may be increased or decreased in accordance with the need of the actual situation. In the embodiment, the light sources include a first light source 1111, a second light source 1112, a third light source 1113 and a fourth light source 1114. The second light source 1112 and the third light source 1113 are disposed opposite to each other. The light sources are, for example, solid-state light emitting sources such as laser diodes or light emitting diodes. The heat dissipating elements include a first heat dissipating element 1121, a second heat dissipating element 1122, a third heat dissipating element 1123 and a fourth heat dissipating element 1124. The first heat dissipating elements 1121 is connected to the first light source 1111. The first heat dissipating element 1121 is disposed adjacent to the air inlet 101 of the housing 10. The second heat dissipating element 1122 is connected to the second light source 1112. The second heat dissipating element 1122 is disposed adjacent to the air outlet 102 of the housing 10. The light engine module 12 is disposed on the transmission path of the illumination beam IL1, and the light engine module 12 is used to convert the illumination beam IL1 into an image beam IL2. The light engine module 12 includes a plurality of optical elements and a light modulation element (e.g. light valve). The optical elements are, for example, lenses or mirrors for guiding the illumination beam, and the number of optical elements is not limited. The light modulation element is, for example, a reflective or transmissive spatial light modulator. In the case being a reflective spatial light modulator, the light modulation element may be a reflective liquid crystal on silicon (LCOS) or a digital micro-mirror device (DMD) etc. In the case being a transmissive spatial light modulator, the light modulation element may be a transparent liquid crystal panel. In addition, depending on the input control signals, the optical modulator 120 is, for example, an optically addressed spatial light modulator (OASLM) or an electrically addressed spatial light modulator (EASLM), and the invention does not limit the type of the optical modulator. The lens module 13 is disposed on the transmission path of the image beam IL2, and the lens module 13 is used to convert the image beam IL2 into a projection beam IL3. The lens module 13 is a plurality of lenses for example, but the number of the lenses is not limited.

The other detailed configurations of the projector 1 of the embodiment will be described below. As shown in FIG. 2, the housing 10 of the embodiment has a first side surface S1, a second side surface S2 opposite to the first side surface S1, a third side surface S3, and a fourth side surface S4 opposite to the third side surface S3. The third side surface S3 and the fourth side surface S4 are adjacent between the first side surface S1 and the second side surface S2 respectively. The lens module 13 of the embodiment has a first optical axis A1. The first side surface S1 and the second side surface S2 of the housing 10 are perpendicular to the first optical axis A1 respectively, and the third side surface S3 and the fourth side surface S4 of the housing 10 are parallel to the first optical axis A1 respectively. In the embodiment, the air inlet 101 of the housing 10 is disposed on the first side surface S1 for example, and the air outlet 102 of the housing 10 is disposed on the second side surface S2 for example. In addition, the light source device 11 of the embodiment has a second optical axis A2, wherein the second optical axis A2 is the central axis of the transmission path of the illumination beam IL1. In the embodiment, the second optical axis A2 of the light source device 11 is, for example, perpendicular to the first optical axis A1 of the lens module 13.

As shown in FIG. 2, the light source device 11 of the embodiment further includes a fixing base 110. The first light source 1111, the second light source 1112, the third light source 1113 and the fourth light source 1114 are disposed around the fixing base 110. The third light source 1113 is connected to the third heat dissipating element 1123, the fourth light source 1114 is connected to the fourth heat dissipating element 1124, and the third heat dissipating element 1123 is located between the first heat dissipating element 1121 and the fixing base 110. Specifically, the fixing base 110 of the embodiment has a first surface F1, a second surface F2 opposite to the first surface F1, a third surface F3, and a fourth surface F4 opposite to the third surface F3. The third surface F3 and the fourth surface F4 are adjacent between the first surface F1 and the second surface F2, the first surface F1 and the second surface F2 are parallel to the first side surface S1 and the second side surface S2 of the housing 10 respectively, the third surface F3 and the fourth surface F4 are parallel to the third side surface S3 and the fourth side surface S4 of the housing 10 respectively, and the fourth surface F4 is connected to the light engine module 12, but the invention is not limited thereto. In the embodiment, the first light source 1111 is disposed on the third surface F3 of the fixing base 110, the second light source 1112 is disposed on the second surface F2 of the fixing base 110, the third light source 1113 is disposed on the first surface F1 of the fixing base 110, and the fourth light source 1114 is disposed on the second surface F2 of the fixing base 110. That is, the first light source 1111, the second light source 1112 and the second light source 1113 are located on different sides of the fixing base 110 respectively, and the fourth light source 1114 and the second light source 1112 are located on the same side of the fixing base 110. In the embodiment, the first heat dissipating element 1121, the second heat dissipating element 1122, the third heat dissipating element 1123 and the fourth heat dissipating element 1124 are a plurality of heat fins for example, but the invention is not limited thereto.

As shown in FIG. 2, the light source device 11 of the embodiment further includes at least four heat conducting elements. In the embodiment, the number of heat conducting elements is four, but the invention does not limit the number of heat conducting elements, and the number of heat conducting elements can be increased to more than four in accordance with the number of light sources and heat dissipating elements. The heat conducting elements include a first heat conducting element 1131 connected between the first light source 1111 and the first heat dissipating element 1121, a second heat conducting element 1132 connected between the second light source 1112 and the second heat dissipating element 1122, a third heat conducting element 1133 connected between the third light source 1113 and the third heat dissipating element 1123, and a fourth heat conducting element 1134 connected between the fourth light source 1114 and the fourth heat dissipating element 1124. In the embodiment, the first heat conducting element 1131, the second heat conducting element 1132, the third heat conducting element 1133 and the fourth heat conducting element 1134 are, for example, tubular heat pipes or water cooling pipes, but the invention is not limited thereto.

It is to be noted that the light sources being respectively connected to the corresponding heat dissipating elements via the heat conducting elements is only one of the embodiments of the invention, and the invention is not limited thereto. In other embodiments, the heat dissipating elements are, for example, directly connected to the corresponding light sources, or part of the heat dissipating elements are directly connected to the corresponding light sources and the rest of the heat dissipating elements are connected to the corresponding light sources via the heat conducting elements. The selection of either connecting the light sources with the heat dissipating elements via the heat conducting elements or directly connecting the light sources with the heat dissipating elements can be determined according to the overall design of the projector 1.

As shown in FIG. 2, the projector 1 of the embodiment further includes at least one fan 14. In the embodiment, the number of fans 14 is one for example, but the invention does not limit the number of fans 14, and the number of fans 14 can be increased to more than one according to the requirement of the actual situation. The fan 14 of the embodiment is disposed in the housing 10, and the fan 14 is located between the air inlet 101 disposed on the first side surface S1 and the air outlet S2 disposed on the second side surface S2. More specifically, the fan 14 of the embodiment is located between the air outlet 102 and the second heat dissipating element 1122. The airflow F generated by the disturbing air of the fan 14 flows into the air inlet 101 and flows out from the air outlet 102, that is, the direction D1 of the airflow F flowing into the air inlet 101 and the direction D2 of the airflow F flowing out from the air outlet 102 face the same direction. The airflow F sequentially flows through the first heat dissipating element 1121, the third heat dissipating element 1123, the fourth heat dissipating element 1124 and the second heat dissipating element 1122 of the light source device 11. In the embodiment, the direction D1 of the airflow F flowing into the air inlet 101 and the direction D2 of the airflow F flowing out from the air outlet 102 are parallel to the first optical axis A1 of the lens module 13 respectively.

In the embodiment, it is to be noted that the first light source 1111, the second light source 1112, the third light source 1113 and the fourth light source 1114 are used to generate the first beam L1, the second beam L2, the third beam L3 and the fourth beam L4 respectively. The first beam L1 is red, the second beam L2 is green, the third beam L3 is blue and the fourth beam L4 is blue. The illumination beam IL1 shown in FIG. 1 is composed of the first beam L1 generated by the first light source 1111, the second beam L2 generated by the second light source 1112 and the fourth beam L4 generated by the fourth light source 1114. The third beam L3 generated by the third light source 1113 is used to assist the second light source 1112 to generate the second beam L2. The configuration of the third light source 1113 and the second light source 1112 cooperating with each other to generate the second beam L2 will be described as follow.

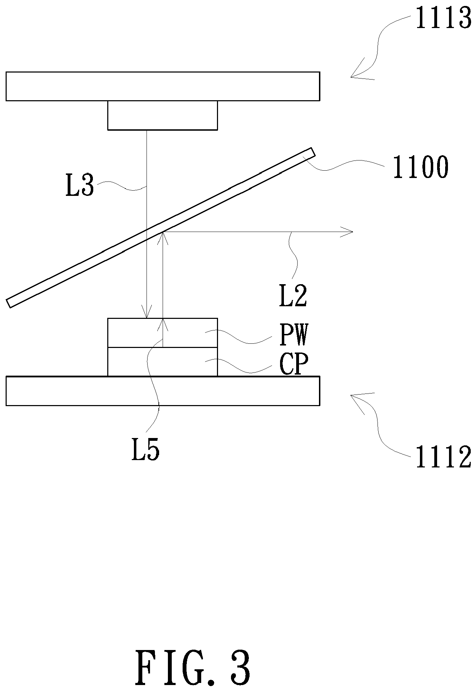

Referring to FIG. 3, which is a schematic structural view of a partial area Z of the light source device 11 shown in FIG. 2. As shown in FIGs. 2 and 3, the second light source 1112 and the third light source 1113 of the embodiment are located on opposite sides of the fixing base 110 respectively, that is, the second light source 1112 and the third light source 1113 are located on the second surface F2 and the third surface F3 of the fixing base 110 respectively. The light source device 11 further includes a dichroic mirror 1100 located between the second light source 1112 and the third light source 1113. In the embodiment, the second light source 1112 includes a wavelength conversion element PW and a light emitting chip CP. The light emitting chip CP of the second light source 1112 is used to generate a fifth light L5, and the fifth beam L5 is blue. The wavelength conversion element PW is used to convert the fifth beam L5 (blue light) emitted from the light emitting chip CP into the second beam L2 (green light) and transmit it to the dichroic mirror 1100. The dichroic mirror 1100 reflects the second beam L2 toward the light engine module 12. Since the third light source 1113 and the second light source 1112 are disposed opposite to each other, the third beam L3 (blue light) emitted from the third light source 1113 can successfully pass through the dichroic mirror 1100 and is transmitted to the wavelength conversion element PW of the second light source 1112. The wavelength conversion element PW is used to convert the third beam L3 (blue light) into the second beam L2 (green light) and transmit it to the dichroic mirror 1100. The dichroic mirror 1100 then transmits the second beam L2 converted from the third beam L3 to the direction toward the light engine module 12.

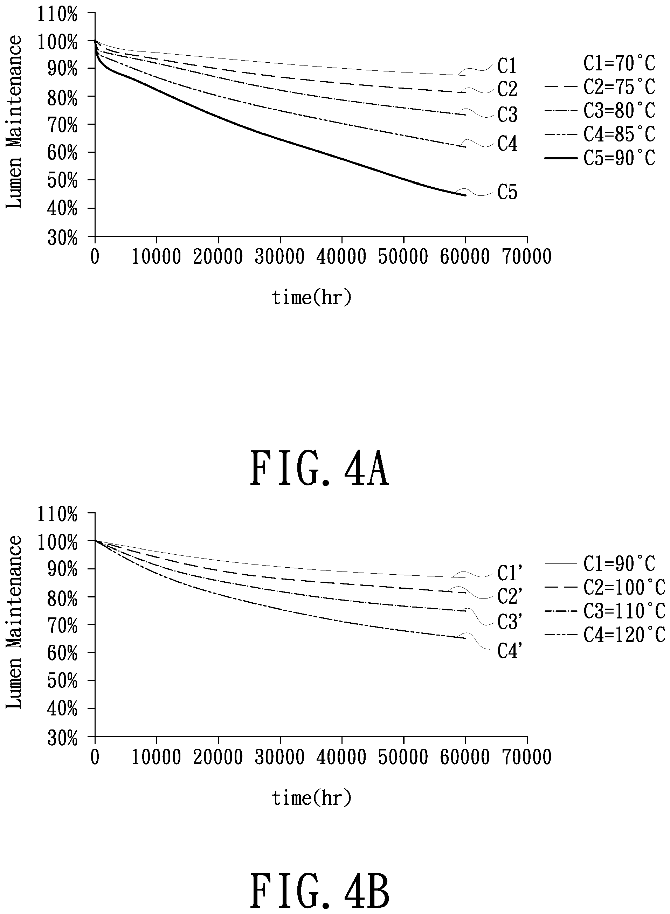

Referring to FIGs. 4A and 4B. FIG. 4A is a schematic view showing the relationship among the temperature, the luminance and the service life of a red light emitting chip. FIG. 4B is a schematic view showing the relationship among the temperature, the luminance and the service life of a blue light emitting chip. In FIG. 4A, the vertical axis represents the lumen maintenance of the red light emitting chip, the horizontal axis represents the time of use of the red light emitting chip, and the curve C1, the curve C2, the curve C3, the curve C4 and the curve C5 represent the lumen maintenances of the red light emitting chip at different temperatures respectively. According to the curve C1 in FIG. 4A, it is shown that the lumen maintenance of the red light emitting chip is still about 90% when the red light emitting chip is at a temperature of 70 °C and used for 60,000 hours. According to the curve C5 in FIG. 4A, it is shown that the lumen maintenance of the red light emitting chip is dropped significantly to about 40% when the red light emitting chip is at a temperature of 90 °C and used for 60,000 hours. In FIG. 4B, the vertical axis represents the lumen maintenance of the blue light emitting chip, the horizontal axis represents the time of use of the blue light emitting chip, and the curve C1', the curve C2', the curve C3' and the curve C4' represent the lumen maintenances of the blue light emitting chip at different temperatures respectively. According to the curve C1' in FIG. 4B, it is shown that the lumen maintenance of the blue light emitting chip is about 90% when the blue light emitting chip is at a temperature of 90 °C and used for 60,000 hours. According to the curve C4' in FIG. 4B, it is shown that the lumen maintenance of the blue light emitting chip is still about 70% when the blue light emitting chip is at a temperature of 120 °C and used for 60,000 hours.

According to the above description, it can be seen that the sensitivity of the red light emitting chip to temperature is higher than the sensitivity of the blue light emitting chip to temperature, that is, the red light emitting chip is more sensitive to temperature. Further, in addition the second light source 1112 converts the fifth beam L5 generated by the light emitting chip CP into the second beam L2 by the wavelength conversion element PW, the second light source 1112 also converts the third beam L3 of the third light source 1113 to generate the second beam L2 (as shown in the configuration of FIG. 3), therefore, the thermal power of the second light source 1112 is higher than that of the first light source 1111 due to that the wavelength conversion element PW of the second light source 1112 cannot completely convert the third beam L3 and the fifth beam L5 into the second beam L2, and the portion of the third beam L3 and the fifth beam L5 not converted by the wavelength conversion element PW generates heat, which results in a higher thermal power of the second light source 1112. Thus, the invention disposes the first light source 1111 (red light source) and the second light source 1112 (for generating a green beam) in a region where the temperature is relatively low in the housing 10, that is, as shown in FIG. 2, the first heat dissipating element 1121 of the first light source 1111 and the second heat dissipating element 1122 of the second light source 1112 are respectively disposed adjacent to the air inlet 101 and the air outlet 102 where the speed of the airflow F and the heat transfer coefficient are relatively high. Thus, the heat generated during the operation of the first light source 1111 and the second light source 1112 can be quickly transmitted out through the first heat dissipating element 1121 and the second heat dissipating element 1122 and taken away by the airflow F, thereby effectively reducing the temperatures of the first light source 1111 and the second light source 1112 and avoiding the affect of the decreased luminance caused by the heat on the first light source 1111 and the second light source 1112. In addition, since the second heat dissipating element 1122 of the second light source 1112 is disposed adjacent to the fan 14, the heat conducted from the second light source 1112 to the second heat dissipating element 1122 can be more quickly transmitted out from the air outlet 102 by the fan 14.

Other embodiments of the projector of the invention will be further described as follow.

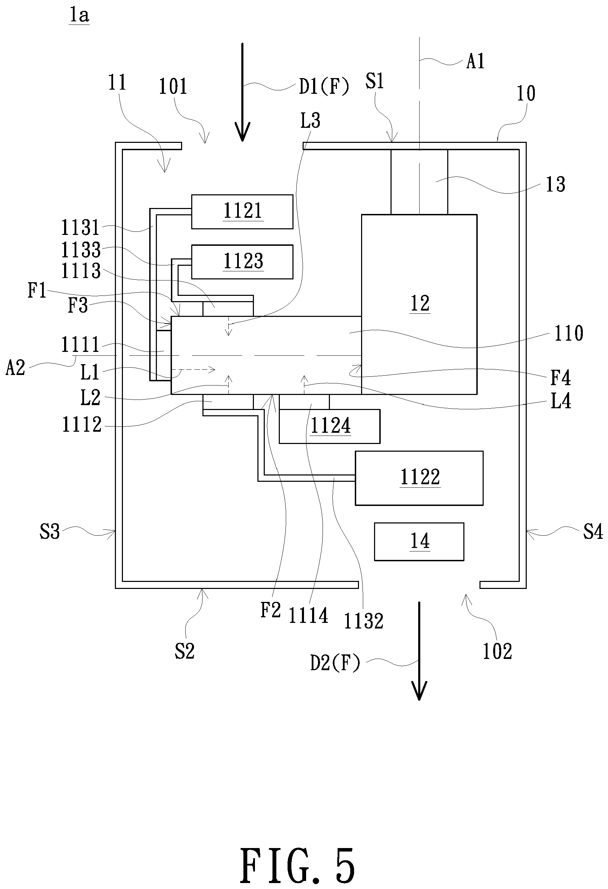

Referring to FIG. 5, which is a schematic structural view of a projector in accordance with another embodiment of the invention. As shown in FIG. 5, the projector 1a of the embodiment is similar to the projector 1 shown in FIG. 2, and the main difference is that the second heat dissipating element 1122 of the light source device 11 of the projector 1a of the embodiment is located between the fourth heat dissipating element 1124 and the fan 14, and the fourth heat dissipating element 1124 is directly connected to the fourth light source 1114.

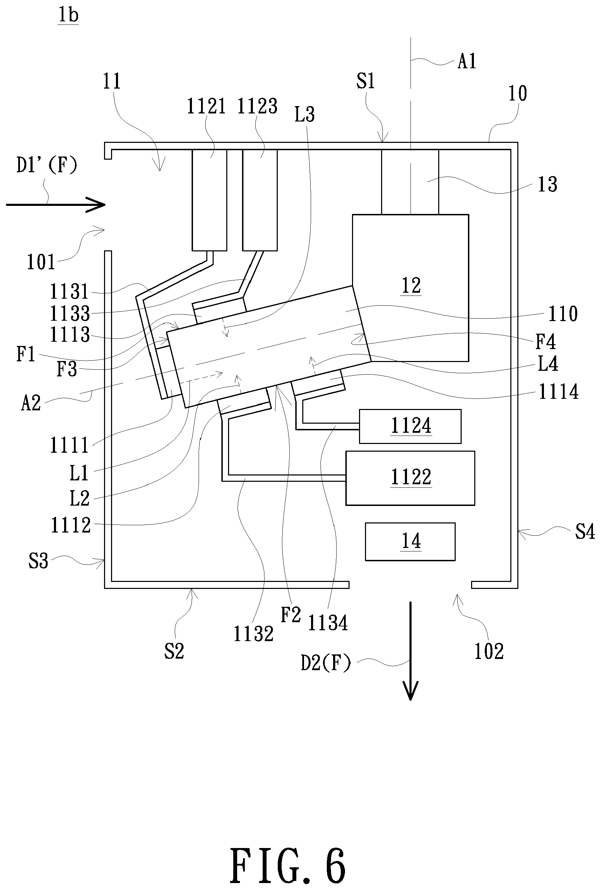

Referring to FIG. 6, which is a schematic structural view of a projector in accordance with another embodiment of the invention. As shown in FIG. 6, the projector 1b of the embodiment is similar to the projector 1 shown in FIG. 2, and the main difference is that the air inlet 101 of the projector 1b of the embodiment is disposed on the third side surface S3 of the housing 10, the second optical axis A2 of the light source device 11 is inclined to the first optical axis A1 of the lens module 13, and the second heat dissipating element 1122 of the light source device 11 is located between the fourth heat dissipating element 1124 and the fan 14. In the embodiment, the direction D1' of the airflow F flowing into the air inlet 101 and the direction D2 of the airflow F flowing out from the air outlet 102 face different directions, that is, the direction D1' of the airflow F flowing into the air inlet 101 and the direction D2 of the airflow F flowing out from the air outlet 102 are perpendicular to each other, and the direction D1' of the airflow F flowing into the air inlet 101 is perpendicular to the first optical axis A1 of the lens module 13.

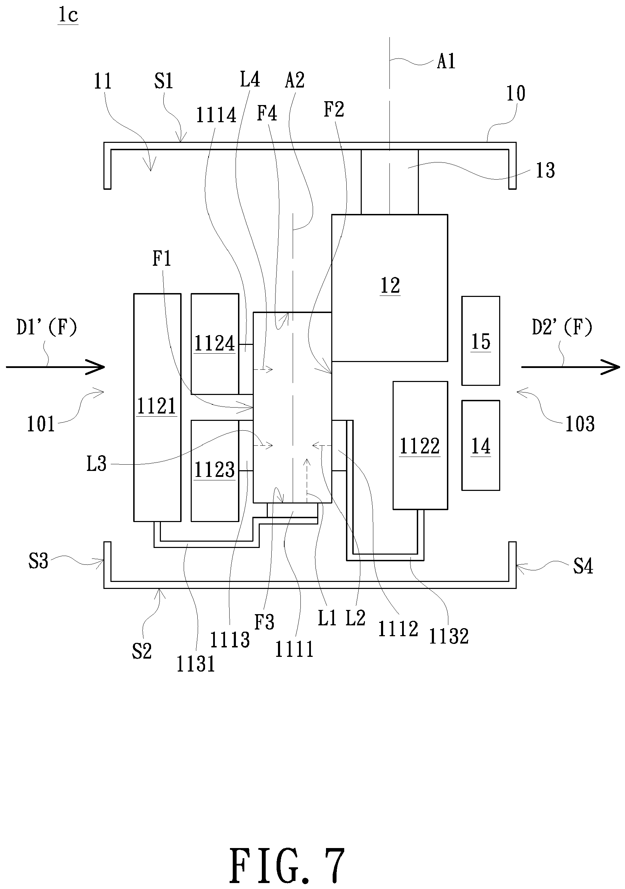

Referring to FIG. 7, which is a schematic structural view of a projector in accordance with another embodiment of the invention. As shown in FIG. 7, the projector 1c of the embodiment is similar to the projector 1 shown in FIG. 2, and the main difference is that the air inlet 101 of the projector 1c of the embodiment is disposed on the third side surface S3 of the housing 10, the air outlet 102 is disposed on the fourth side surface S4 of the housing 10, the second optical axis A2 of the light source device 11 is parallel to the first optical axis A1 of the lens module 13, the fourth light source 1114 and the third light source 1113 are located on the same side of the fixing base 110, the fourth heat dissipating element 1124 and the third heat dissipating element 1123 are located between the fixing base 110 and the first heat dissipating element 1121, and the projector 1c of the embodiment has two fans 14 and 15 located between the second heat dissipating element 1122 and the air outlet 102. In the embodiment, the direction D1' of the airflow F flowing into the air inlet 101 and the direction D2' of the airflow F flowing out from the air outlet 102 face the same direction, and the direction D1' of the airflow F flowing into the air inlet 101 and the direction D2' of the airflow F flowing out from the air outlet 102 are perpendicular to the first optical axis A1 of the lens module 13 respectively. In addition, in the embodiment, the first surface F1 and the second surface F2 of the fixing base 110 are parallel to the third side surface S3 and the fourth side surface S4 of the housing 10 respectively, the third surface F3 and the fourth surface F4 are parallel to the second side surface S2 and the first side surface S1 of the housing 10 respectively, the second surface F2 is connected to the light engine module 12, the first light source 1111 is disposed on the third surface F3 of the fixing base 110, the second light source 1112 is disposed on the second surface F2 of the fixing base 110, the third light source 1113 is disposed on the first surface F1 of the fixing base 110, the fourth light source 1114 is disposed on the first surface F1 of the fixing base 110, the third heat dissipating element 1123 is directly connected to the third light source 1113, and the fourth heat dissipating element 1124 is directly connected to the fourth light source 1114.

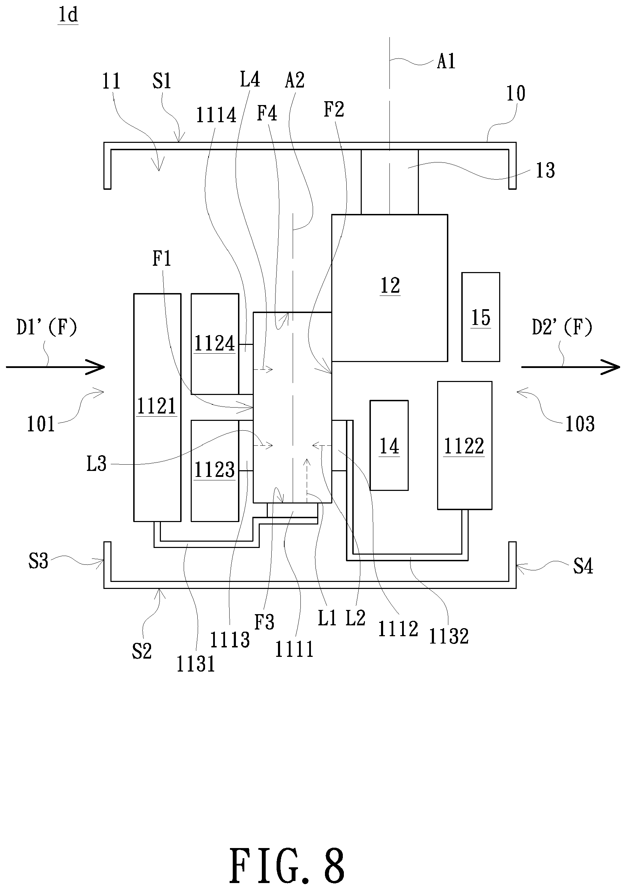

Referring to FIG. 8, which is a schematic structural view of a projector in accordance with another embodiment of the invention. As shown in FIG. 8, the projector 1d of the embodiment is similar to the projector 1c shown in FIG. 7, and the main difference is that the fan 14 of the projector 1d of the embodiment is located between the fixing base 110 and the second heat dissipating element 1122, and the fan 15 is located between the light engine module 12 and the air outlet 102. It is to be noted that the arrangement positions of fan 14 and fan 15 shown in FIGs. 7 and 8 are only two of the embodiments of the invention, and the invention is not limited thereto. The fan 14 and the fan 15 may have an arrangement different from that in FIGs. 7 and 8 according to the requirement of the actual situation.

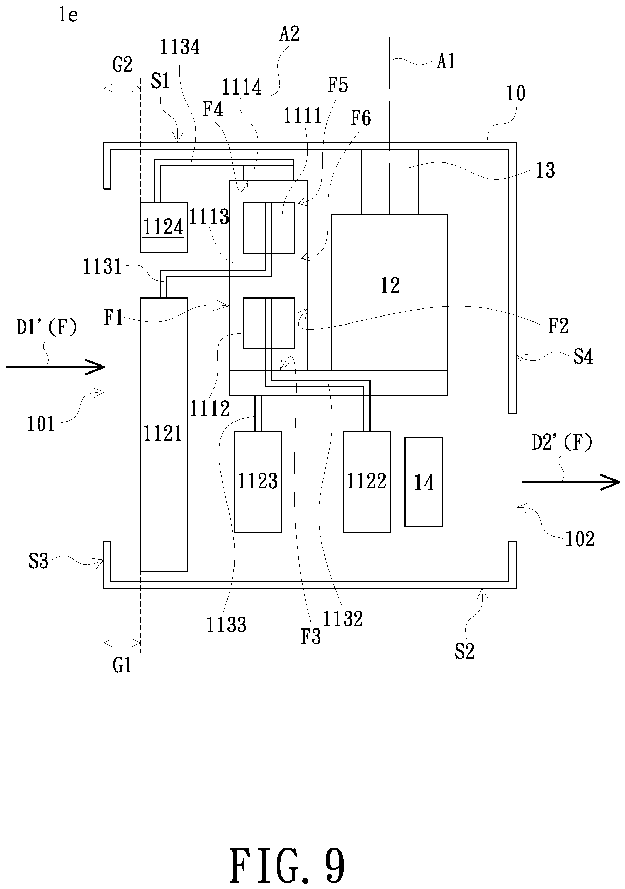

Referring to FIG. 9, which is a schematic structural view of a projector in accordance with another embodiment of the invention. As shown in FIG. 9, the projector 1e of the embodiment is similar to the projector 1 shown in FIG. 2, and the main difference is that the air inlet 101 of the projector 1e of the embodiment is disposed on the third side surface S3 of the housing 10, the air outlet 102 is disposed on the fourth side surface S4 of the housing 10, the second optical axis A2 of the light source device 11 is parallel to the first optical axis A1 of the lens module 13, the second light source 1112, the third light source 1113 and the fourth light source 1114 are located on different sides of the fixing base 110 respectively, and the first light source 1111 and the second light source 1112 are located on the same side of the fixing base 110. Further, the first heat dissipating element 1121 and the third heat dissipating element 1123 of the embodiment are sequentially arranged along the third side surface S3 of the housing 10. That is, the first heat dissipating element 1121 is disposed between the third side surface S3 of the housing 10 and the third heat dissipating element 1123, there is a first distance G1 between the first heat dissipating element 1121 and the air inlet 101, there is a second distance G2 between the fourth heat dissipating element 1124 and the air inlet 101, the first distance G1 is equal to the second distance G2, and the distance is defined as the distance between the heat dissipating element and the air inlet in the direction where the airflow flows. In the embodiment, the direction D1' of the airflow F flowing into the air inlet 101 and the direction D2' of the airflow F flowing out from the air outlet 102 face the same direction, and the direction D1' of the airflow F flowing into the air inlet 101 and the direction D2' of the airflow F flowing out from the air outlet 102 are perpendicular to the first optical axis A1 of the lens module 13 respectively. The fixing base 110 further includes a top surface F5 and a bottom surface F6 opposite to each other. The top surface F5 and the bottom surface F6 are adjacent to the first surface F1, the second surface F2, the third surface F3 and the fourth surface F4, the first surface F1 and the second surface F2 are parallel to the third side surface S3 and the fourth side surface S4 of the housing 10 respectively, the third surface F3 and the fourth surface F4 are parallel to the second side surface S2 and the first side surface S1 of the housing 10 respectively, the third surface F3 is connected to the light engine module 12, the first light source 1111 and the second light source 1112 are disposed on the top surface F5 of the fixing base 110, the third light source 1113 is disposed on the bottom surface F6 of the fixing base 110, the fourth light source 1114 is disposed on the fourth surface F4 of the fixing base 110, and the second light source 1112 is disposed facing the third light source 1113.

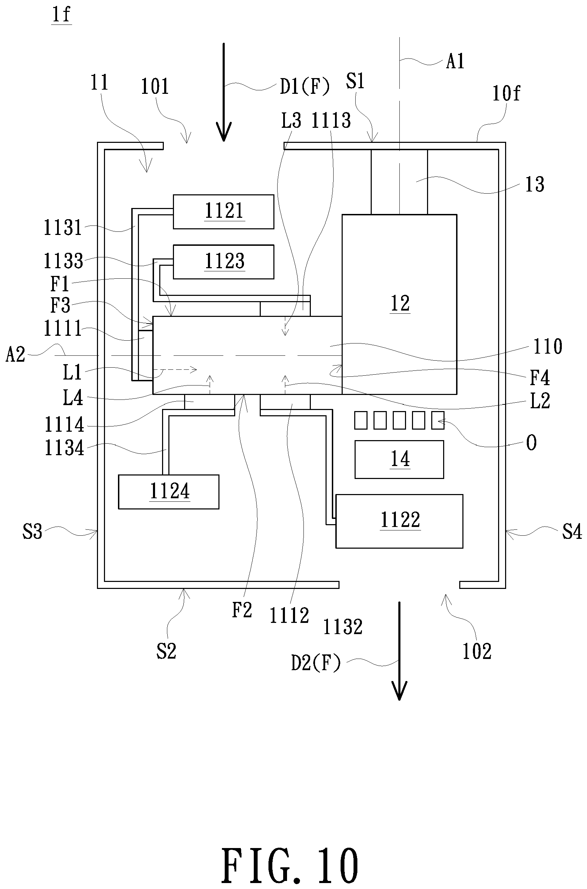

Referring to FIG. 10, which is a schematic structural view of a projector in accordance with another embodiment of the invention. As shown in FIG. 10, the projector 1f of the embodiment is similar to the projector 1 shown in FIG. 2, and the main difference is that the second heat dissipating element 1122 of the projector 1f of the embodiment is located between the fan 14 and the air outlet 102, the housing 10f further has at least one opening O disposed on one side of the second heat dissipating element 1122 (that is, disposed on the bottom surface of the housing 10f), and the bottom surface is connected to the first side surface S1, the second side surface S2, the third side surface S3 and the fourth side surface S4. Specifically, the opening O of the embodiment is disposed on the housing 10f between the light engine module 12 and the fan 14. The airflow F generated by the fan 14 flows into the housing 10f via the opening O, thereby increasing the thermal transfer at the air outlet 102 of the housing 10f. Thus, the heat conducted from the second light source 1112 to the second heat dissipating element 1122 can flow out from the air outlet 102 more quickly and the heat dissipating effect of the second heat dissipating element 1122 is enhanced.

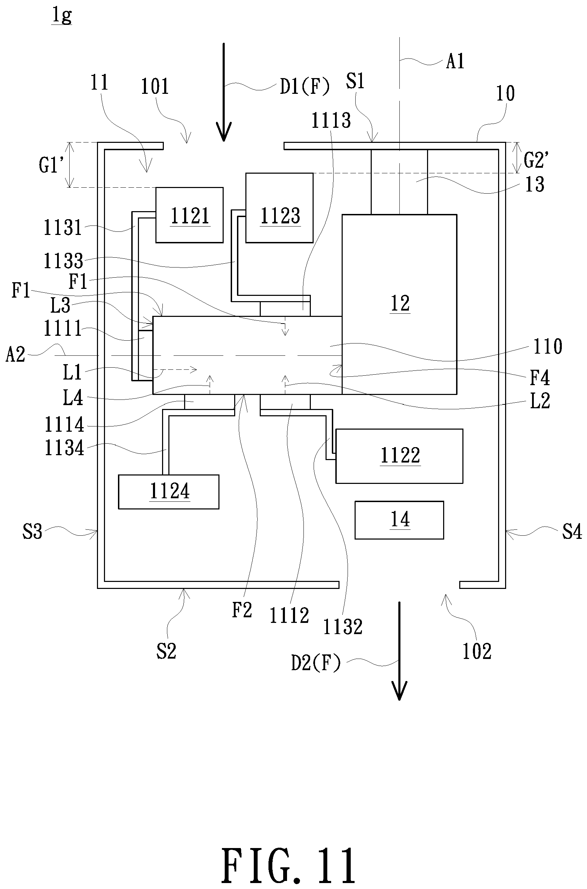

Referring to FIG. 11, which is a schematic structural view of a projector in accordance with another embodiment of the invention. As shown in FIG. 11, the projector 1g of the embodiment is similar to the projector 1 shown in FIG. 2, and the main difference is that the first heat dissipating element 1121 and the third heat dissipating element 1123 of the projector 1g of the embodiment are arranged along the first side surface S1 of the housing 10, there is a first distance G1' between the first heat dissipating element 1121 and the air inlet 101, there is a second distance G2' between the third heat dissipating element 1123 and the air inlet 101, and the first distance G1' is not equal to the second distance G2'. In the embodiment, the second distance G2' is smaller than the first distance G1'.

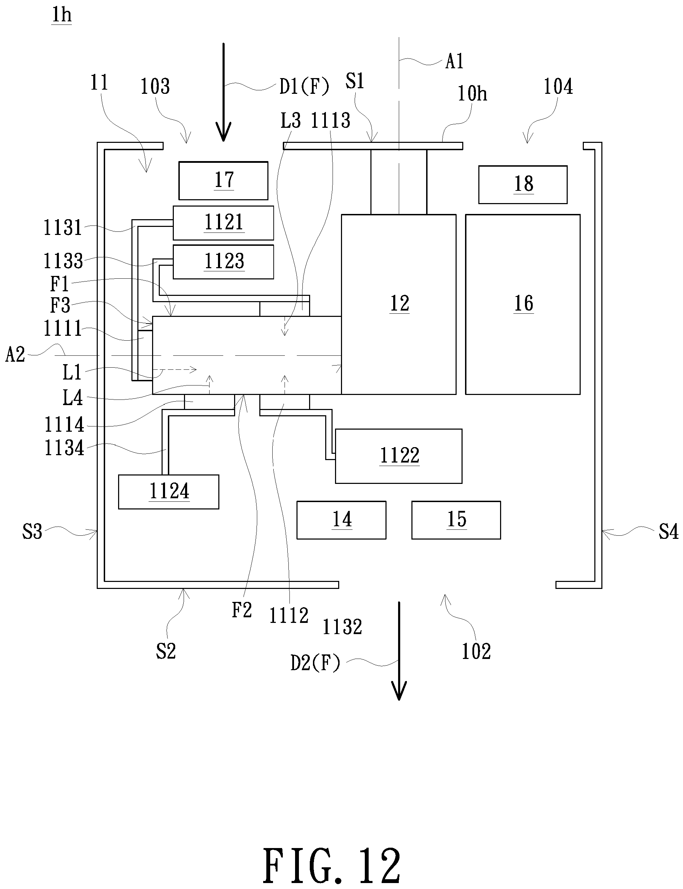

Referring to FIG. 12, which is a schematic structural view of a projector in accordance with another embodiment of the invention. As shown in FIG. 12, the projector 1h of the embodiment is similar to the projector 1 shown in FIG. 2, and the main difference is that the projector 1h of the embodiment further includes an electronic device 16 disposed in the housing 10h and adjacent to the light engine module 12 and the lens module 13. In the embodiment, the electronic device 16 is, for example, a circuit module having an electronic component such as a power, a controller and a plurality of electrical boards. In addition, the projector 1h of the embodiment has a first air inlet 101 and a second air inlet 104 disposed on the first side surface S1 of the housing 10h and four fans 14, 15, 17 and 18. In the embodiment, the fan 14 and the fan 15 are located between the second heat dissipating element 1122 and the air outlet 102, the fan 17 is located between the first air inlet 101 and the first heat dissipating element 1121, and the fan 18 is located between the second air inlet 104 and the electronic device 16. In the structural design of the embodiment, the thermal transfer in the housing 10h is effectively increased, and the heat generated by the first light source 1111 and the first light source 1111 which are more sensitive to temperature can be transmitted out from the housing 10h. It is to be noted that the electronic device 16 of the embodiment can also be disposed in the projector structure of FIGs. 2 and 5 to 11, and the projector structure of FIGs. 2 and 5 to 11 can still achieve the purpose of improving the heat dissipating efficiency.

In summary, the projector of the embodiment of the invention mainly disposes the heat dissipating element for a light source having a higher temperature sensitivity and a higher light output power at the air inlet and the air outlet having a higher flow rate and a relatively high heat transfer coefficient, that is, the first heat dissipating element of the first light source (red light source) is disposed at a position adjacent to the air inlet, and the second heat dissipating element of the second light source (for generating the green beam) is disposed at a position adjacent to the air outlet. In the structural design, the efficiency of transmitting the heat generated by the first light source and the second light source out from the housing is effectively enhanced, thereby enhancing the life of the light source device and reducing the attenuation of luminance.

The foregoing description of the preferred embodiment of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the invention" or the like is not necessary limited the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the disclosure is intended to be dedicated to the public regardless of whether the element or component is explicitly recited in the following claims. Furthermore, the terms such as the first stop part, the second stop part, the first ring part and the second ring part are only used for distinguishing various elements and do not limit the number of the elements.

## Claims

1. A projector, comprising:
a housing, having an air inlet and an air outlet;
a light source device, disposed in the housing and located between the air inlet and the air outlet, the light source device adapted to provide an illumination beam, the light source device comprising:
a plurality of light sources, comprising:
a first light source;
a second light source ; and
a third light source, wherein the second light source and the third light source are disposed opposite to each other ; and
a plurality of heat dissipating elements, correspondingly connected to the plurality of light sources, the plurality of heat dissipating elements comprising:
a first heat dissipating element adjacent to the air inlet; and
a second heat dissipating element adjacent to the air outlet, wherein the first light source is connected to the first heat dissipating element, and the second light source is connected to the second heat dissipating element;
a light engine module, disposed on a transmission path of the illumination beam and adapted to convert the illumination beam into an image beam; and
a lens module, disposed on a transmission path of the image beam and adapted to convert the image beam into a projection beam.

2. The projector according to claim 1, wherein the housing has a first side surface, a second side surface opposite to the first side surface, a third side surface and a fourth side surface opposite to the third side surface, the third side surface and the fourth side surface are adjacent between the first side surface and the second side surface respectively, and the lens module has a first optical axis, the first side surface and the second side surface are perpendicular to the first optical axis respectively, and the third side surface and the fourth side surface are parallel to the first optical axis respectively.

3. The projector according to claim 2, wherein the air inlet of the housing is disposed on the first side surface, and the air outlet is disposed on the second side surface or the air inlet of the housing is disposed on the third side surface, and the air outlet is disposed on the second side surface.

4. The projector according to claim 2 or 3, further comprising at least one fan, wherein the at least one fan is disposed in the housing and the at least one fan is located between the air outlet and the second heat dissipating element, an airflow is generated by the at least one fan, the airflow flows into the air inlet and flows out from the air outlet, a direction of the airflow flowing into the air inlet and a direction of the airflow flowing out from the air outlet are parallel or non-parallel to the first optical axis of the lens module respectively.

5. The projector according to any one of claims 2-4, wherein the light source device has a second optical axis, and the second optical axis is parallel to the first optical axis of the lens module.

6. The projector according to any one of the preceding claims, wherein the light source device further comprises a fixing base and/or the light sources further comprise a fourth light source, the heat dissipating elements further comprise a third heat dissipating element and a fourth heat dissipating element, the third light source is connected to the third heat dissipating element, the fourth light source is connected to the fourth heat dissipating element, the first light source, the second light source, the third light source and the fourth light source are disposed to the fixing base respectively, the third heat dissipating element is located between the first heat dissipating element and the fixing base, and the fourth heat dissipating element is located between the second heat dissipating element and the fixing base.

7. The projector according to claim 6, wherein there is a first distance between the first heat dissipating element and the air inlet, there is a second distance between the third heat dissipating element and the air inlet, and the first distance and the second distance are equal to each other; or a first distance is between the first heat dissipating element and the air inlet, a second distance between the third heat dissipating element and the air inlet, and the first distance and the second distance are not equal to each other.

8. The projector according to claims 6 or 7, wherein the light source device further comprises at least four heat conducting elements, the heat conducting elements comprise a first heat conducting element connected between the first light source and the first heat dissipating element, a second heat conducting element connected between the second light source and the second heat dissipating element, a third heat conducting element connected between the third light source and the third heat dissipating element, and a fourth heat conducting element connected between the fourth light source and the fourth heat dissipating element.

9. The projector according to any one of claim 6-8, wherein the first light source, the second light source, the third light source and the fourth light source generate a first beam, a second beam, a third beam and a fourth beam respectively, the first beam is red, the second beam is green, the third beam is blue and the fourth beam is blue, and the illumination beam is composed of the first beam, the second beam and the fourth beam.

10. The projector according to claim 9, wherein the second light source and the third light source are located on opposite sides of the fixing base respectively, the second light source comprises a wavelength conversion element and a light emitting chip, the light emitting chip is apated to generate a fifth beam, the fifth beam has a color light same as the third light source, the light source device further comprises a dichroic mirror located between the second light source and the third light source, the wavelength conversion element is adapted to convert the fifth beam emitted from the light emitting chip of the second light source into the second beam and transmitting the converted second beam to the dichroic mirror, the dichroic mirror reflects the second beam in a direction toward the light engine module, the third beam emitted from the third light source passes through the wavelength conversion element and is transmitted to the wavelength conversion element, and the wavelength conversion element is adapted to convert the third beam into the second beam and transmitting the converted second beam to the dichroic mirror.

11. The projector according to any one of claims 6 -10, wherein the first light source, the second light source and the third light source are located on different sides of the fixing base respectively, and the fourth light source and the second light source are located on the same side of the fixing base; or wherein the second light source, the third light source and the fourth light source are located on different sides of the fixing base respectively, and the first light source and the second light source are located on the same side of the fixing base.

12. The projector according to any one of the preceding claims, wherein the housing further has at least one opening, the opening is located on one side of the second heat dissipating element, and the opening is located on a bottom surface of the housing.

13. The projector according to any one of the preceding claims, further comprising an electronic device, wherein the electronic device is disposed in the housing and adjacent to the light source device, the light engine module and the lens module.

14. The projector according to claim 2, further comprising at least one fan, wherein the at least one fan is located between the first heat dissipating element and the second heat dissipating element, an airflow is generated by the at least one fan, the airflow flows into the air inlet and flows out from the air outlet, and the airflow sequentially passes through the first heat dissipating element, the at least one fan and the second heat dissipating element.

15. The projector according to claim 2, wherein the light source device has a second optical axis, and the second optical axis is not parallel to the first optical axis of the lens module.
